(19) Europäisches Patentamt / European Patent Office / Office européen des brevets

(11) **EP 4 752 512 A1**

(12) **EUROPEAN PATENT APPLICATION**
published in accordance with Art. 153(4) EPC

(43) Date of publication:
**03.06.2026 Bulletin 2026/23**

(21) Application number: **24862826.5**

(22) Date of filing: **04.09.2024**

(51) International Patent Classification (IPC):
***G01L 5/00*** *(2006.01)*

(52) Cooperative Patent Classification (CPC):
**G01L 5/00**

(86) International application number:
**PCT/JP2024/031702**

(87) International publication number:
**WO 2025/053174 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146043**

(71) Applicant: **National University Corporation Hokkaido University Hokkaido 060-0808 (JP)**

(72) Inventors:
• **IKEBE, Masayuki Sapporo-shi, Hokkaido 060-0808 (JP)**
• **NOZU, Ayato Sapporo-shi, Hokkaido 060-0808 (JP)**

(74) Representative: **J A Kemp LLP 80 Turnmill Street London EC1M 5QU (GB)**

(54) **PRESSURE SENSOR AND REMOTE PRESSURE DETECTION SYSTEM**

(57)     Provided is pressure sensor capable of accurately detecting pressure applied to an object from the outside as a surface and the like.

The pressure sensor includes: a plurality of sensor pixels PX arranged in a planar pattern, each sensor pixel PX including a film-like pressure-sensitive film 2 of which a resistance value changes when pressed from a front surface and a first electrode layer 4 and a second electrode layer 6 laminated only on a rear surface of the pressure-sensitive film 2; and a drive circuit that drives each sensor pixel PX, the drive circuit detecting pressure of pressing applied to the plurality of sensor pixels PX for each sensor pixel PX based on a change in the resistance value caused by the pressing.

Fig. 3 (a)

Fig. 3 (b)

Fig. 3 (c)

Fig. 3 (d)

EP 4 752 512 A1

## Description

Technical Field

The present invention relates to a technical field of pressure sensors and remote pressure detection systems. More specifically, the present invention relates to a technical field of a pressure sensor that detects a value of pressure applied to an object from outside and a remote pressure detection system using the pressure sensor.

Background Art

Conventionally, pressure sensors of various modes have been developed to detect pressure applied to an object from the outside. Examples of related art literature describing conventional art related to such pressure sensors include Patent Literature 1 below.

The pressure sensor disclosed in Patent Literature 1 includes at least: an electrode substrate on which at least a pair of electrodes are formed; a pressure-sensitive conductive member of which electrical resistance changes due to a change in a contact area between the pressure-sensitive conductive member and the electrode substrate when pressure is applied; an insulating covering member covering at least a pressure-applying surface of the pressure-sensitive conductive member; and a wiring portion electrically connected to the electrodes, respectively, wherein the insulating covering member includes at least a pressure sensitive adhesive layer and a flexible film with a Young's modulus of 1.7 GPa (gigapascals) or more and 6.5 GPa or less and a thickness of 10 $\mu$m or more and 100 $\mu$m or less, and the pressure-sensitive conductive member is fixed on the electrode substrate by applying the pressure sensitive adhesive layer to the electrode substrate.

Citation List

Patent Literature

Patent Literature 1: Japanese Patent Laid-Open No. 2012-159463

Summary of Invention

Technical Problem

However, with the related art described in Patent Literature 1 above, it cannot be said that detection of pressure applied to an object from the outside as a surface of a certain size is taken into consideration. Therefore, the related art had a problem in that it was unable to address the need to detect the pressure as a surface such as the pressure applied to the skin during palpation in the medical field.

The present invention has been made in consideration of the problem described above and an example of an object thereof is to provide a pressure sensor capable of accurately detecting pressure applied to an object from the outside as a surface and a remote pressure detection system using the pressure sensor.

Solution to Problem

In order to solve the problem described above, an invention according to claim 1 includes: a plurality of pressure detecting units arranged in a planar pattern, each pressure detecting unit including a film-like resistor of which a resistance value changes when pressed from a front surface and a drive line laminated only on a rear surface of the resistor; and detecting means that drives the drive line for each of the pressure detecting units, the detecting means detecting pressure of pressing applied to the plurality of the pressure detecting units for each of the pressure detecting units based on a change in the resistance value caused by the pressing.

According to the invention described in claim 1, by driving the drive line laminated only on the rear surface of the film-like resistor of which the resistance value changes when the front surface of the resistor is pressed, the pressure of the pressing based on a change in the resistance value in the plurality of pressure detecting units is detected for each pressure detecting unit. Therefore, laminating each drive line only on the rear surface of the film-like resistor enables a manufacturing step as a pressure sensor to be simplified and manufacturing costs to be reduced, detection sensitivity of pressure due to the resistor being directly pressed from the front surface side of the pressure detecting units can be improved and, furthermore, the pressure detecting units arranged in a planar pattern enables pressure to be detected as a surface.

In order to solve the problem described above, an invention according to claim 2 relates to the pressure sensor according to claim 1, further including a projection on the front surface of the resistor in each of the pressure detecting units.

According to the invention described in claim 2, in addition to the operation described in claim 1, since the pressure sensor according to claim 2 further includes the projection on the front surface of the resistor in each pressure detecting unit, the sensitivity in pressure detection can be improved.

In order to solve the problem described above, an invention according to claim 3 relates to the pressure sensor according to claim 2, configured such that the projection is a rod-like projection erected on the front surface.

According to the invention described in claim 3, in addition to the operation described in claim 2, since the projection is the rod-like projection erected on the front surface of the resistor, the sensitivity in pressure detection can be further improved.

In order to solve the problem described above, an invention according to claim 4 relates to the pressure sensor according to any one of claims 1 to 3, wherein the plurality of the pressure detecting units are regularly arranged in an array, one of the pressure detecting units includes a plurality of the drive lines, and the detecting means is configured to drive each of the drive lines included in each of the plurality of the pressure detecting units either by a sequential drive system or a multiple parallel drive system.

According to the invention described in claim 4, in addition to the operation described in any one of claims 1 to 3, the plurality of the pressure detecting units are regularly arranged in an array, and each drive line included in each of the plurality of the pressure detecting units is driven either by a sequential drive system or a multiple parallel drive system. Therefore, a change in the resistance value in each pressure detecting unit can be accurately detected as a surface.

In order to solve the problem described above, an invention according to claim 5 relates to the pressure sensor according to any one of claims 1 to 4, wherein one of the pressure detecting units includes one first drive line and two second drive lines which are the drive lines intersecting at a position of the pressure detecting unit on the rear surface, and the detecting means is configured to drive each of the drive lines either by: (i) a drive method involving driving the first drive line and the second drive lines constituting one of the pressure detecting units independently of each other; or (ii) a drive method involving driving the two second drive lines constituting one of the pressure detecting units independently of each other.

According to the invention described in claim 5, in addition to the operation described in any one of claims 1 to 4, since one pressure detecting unit includes one first drive line and two second drive lines that intersect at the position of the pressure detecting unit and each drive line is driven either by the drive method described in (i) above or the drive method described in (ii) above, resolution of pressure detection can be improved.

In order to solve the problem described above, an invention according to claim 6 relates to the pressure sensor according to any one of claims 1 to 5, wherein each of the pressure detecting units includes shielding means that electrically shields the one pressure detecting unit from the other pressure detecting units, and the detecting means is configured to drive the pressure detecting unit that is a drive object while maintaining the shielding means included in each of the other pressure detecting units other than the pressure detecting unit that is the drive object at a same potential.

According to the invention described in claim 6, in addition to the operation described in any one of claims 1 to 5, since each of the pressure detecting units includes shielding means and the shielding means included in each of other pressure detecting units other than the pressure detecting unit that is the drive object are maintained at a same potential, a formation of a so-called current path to pressure detecting units not being pressed can be prevented and detection sensitivity of pressure can be improved.

In order to solve the problem described above, an invention according to claim 7 relates to the pressure sensor according to any one of claims 1 to 6, wherein the pressure detecting units are arranged in a shape that can be mounted to a tip of a human finger, and the pressure sensor further includes mounting means for mounting the pressure sensor to the tip.

According to the invention described in claim 7, in addition to the operation described in any one of claims 1 to 6, since the pressure detecting units are arranged in a shape that can be mounted to a tip of a human finger and the pressure sensor further includes mounting means for mounting the pressure sensor to the tip of a human finger, for example, pressure when a doctor palpates a person can be accurately detected.

In order to solve the problem described above, an invention according to claim 8 relates to the pressure sensor according to claim 7, wherein the pressure detecting units are configured to have a shape that can be mounted to the tip like a ring.

According to the invention described in claim 8, in addition to the operation described in claim 7, since the pressure detecting units have a shape that can be mounted to the tip like a ring, for example, pressure can be accurately detected while preventing the pressure sensor from falling off the fingertip during palpation.

In order to solve the problem described above, an invention according to claim 9 relates to the pressure sensor according to any one of claims 1 to 8, wherein the detecting means is configured to further detect a depth of the pressing based on a width of an area on the pressure sensor including a position of the pressure detecting unit where the pressure is detected.

According to the invention described in claim 9, in addition to the operation described in any one of claims 1 to 8, since a depth of the pressing is further detected based on a width of an area on the pressure sensor including a position of the pressure detecting unit where a change in a resistance value is detected, detection of pressure due to a change in the resistance value and detection of the depth of pressing can be simultaneously performed.

In order to solve the problem described above, an invention according to claim 10 includes: the pressure sensor according to any one of claims 1 to 9; transmitting means that transmits detected data indicating a detection result of the pressure; receiving means that receives the transmitted detected data; and output means that outputs the detection result indicated by the received detected data.

According to the invention described in claim 10, in addition to the operation described in any one of claims 1 to 9, since detected data indicating a detection result of pressure by the pressure sensor is transmitted, the detected data is received, and a detection result indicated by the received detected data is output, the detection result of pressure by the pressure sensor can be recognized even at a location away from where the pressure sensor is located.

Advantageous Effects of Invention

According to the present invention, by driving the drive line laminated only on the rear surface of the film-like resistor of which the resistance value changes when the front surface of the resistor is pressed, the pressure of the pressing based on a change in the resistance value in the plurality of pressure detecting units is detected for each pressure detecting unit.

Therefore, laminating each drive line only on the rear surface of the film-like resistor enables a manufacturing step as a pressure sensor to be simplified and manufacturing costs to be reduced, detection sensitivity of pressure due to the resistor being pressed from the front surface side of the pressure detecting units can be improved and, furthermore, the pressure detecting units arranged in a planar pattern enables pressure to be detected as a surface.

Brief Description of Drawings

[Fig. 1] Fig. 1 is a block diagram showing an approximate configuration of a remote pressure detection system according to an embodiment.
[Figs. 2(a) to 2(f)] Figs. 2(a) to 2(f) show an external view showing a structure of an indenter according to the embodiment, in which Fig. 2(a) is a top view, Fig. 2(b) is a rear view, Fig. 2(c) is a left side view, Fig. 2(d) is a front view, Fig. 2(e) is a right side view, and Fig. 2(f) is a bottom view.
[Figs. 3(a) to 3(d)] Figs. 3(a) to 3(d) show an external view showing a structure of a sensor unit according to the embodiment, in which Fig. 3(a) is a top view, Fig. 3(b) is a longitudinal side view, Fig. 3(c) is a lateral side view, and Fig. 3(d) is a bottom view.
[Figs. 4(a) and 4(b)] Figs. 4(a) and 4(b) show a diagram showing a structure of sensor pixels according to the embodiment, in which Fig. 4(a) is a plan view showing a structure of a first electrode layer and Fig. 4(b) is a plan view showing a structure of a second electrode layer.
[Fig. 5] Fig. 5 is a block diagram showing an approximate configuration of a pressure sensor according to the embodiment.
[Fig. 6] Fig. 6 is a circuit diagram showing a detailed configuration of the pressure sensor according to the embodiment.
[Fig. 7] Fig. 7 is a timing chart (i) showing an operation of the pressure sensor according to the embodiment.
[Fig. 8] Fig. 8 is a timing chart (ii) showing an operation of the pressure sensor according to the embodiment.

[Fig. 9] Fig. 9 is a timing chart (iii) showing an operation of the pressure sensor according to the embodiment.
[Figs. 10(a) and 10(b)] Figs. 10(a) and 10(b) show a diagram showing a pressure display example and the like in the pressure sensor according to the embodiment, in which

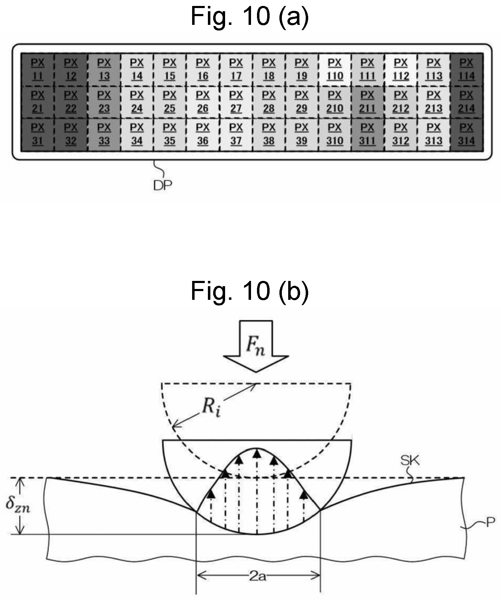

Fig. 10(a) is a diagram showing the pressure display example and Fig. 10(b) is a diagram showing a calculation of a press-in depth using the pressure sensor according to the embodiment.

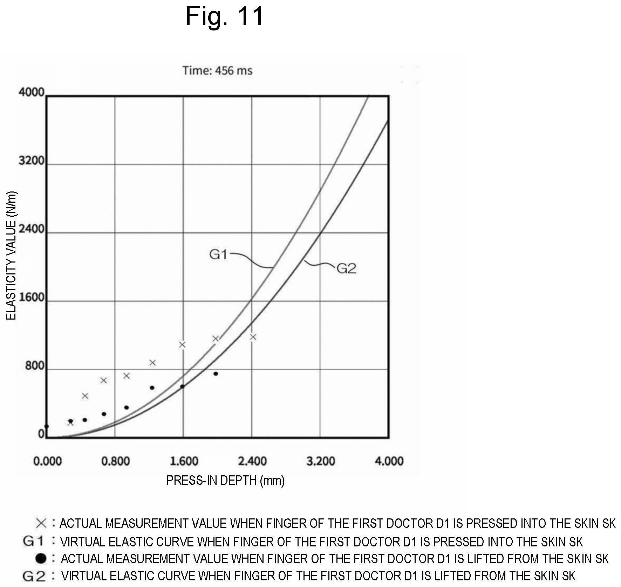

[Fig. 11] Fig. 11 is a graph chart explaining detections of a press-in depth and viscosity, respectively, in the pressure sensor according to the embodiment.

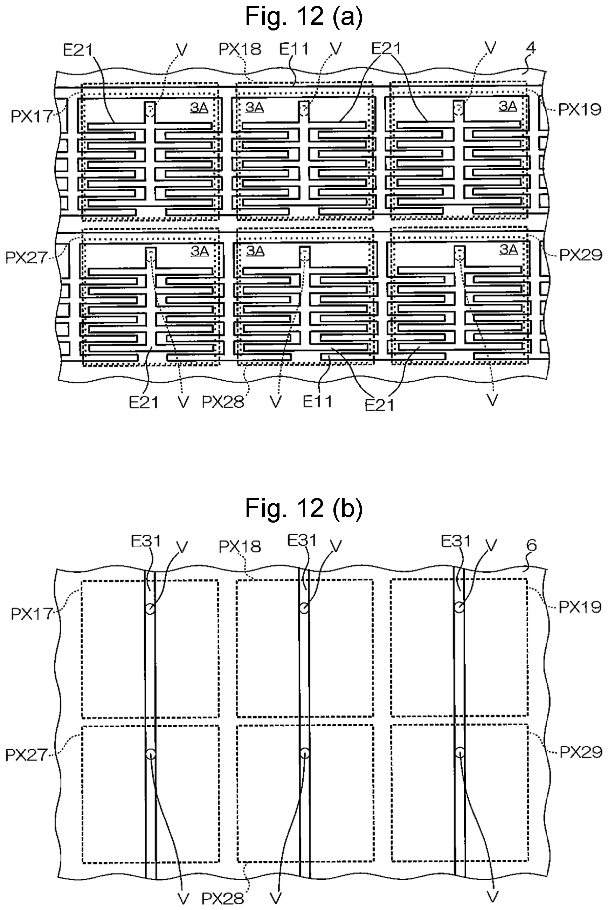

[Figs. 12(a) and 12(b)] Figs. 12(a) and 12(b) show a plan view showing a structure of sensor pixels according to a first modification, in which Fig. 12(a) is a plan view showing a structure of a first electrode layer and Fig. 12(b) is a plan view showing a structure of a second electrode layer.

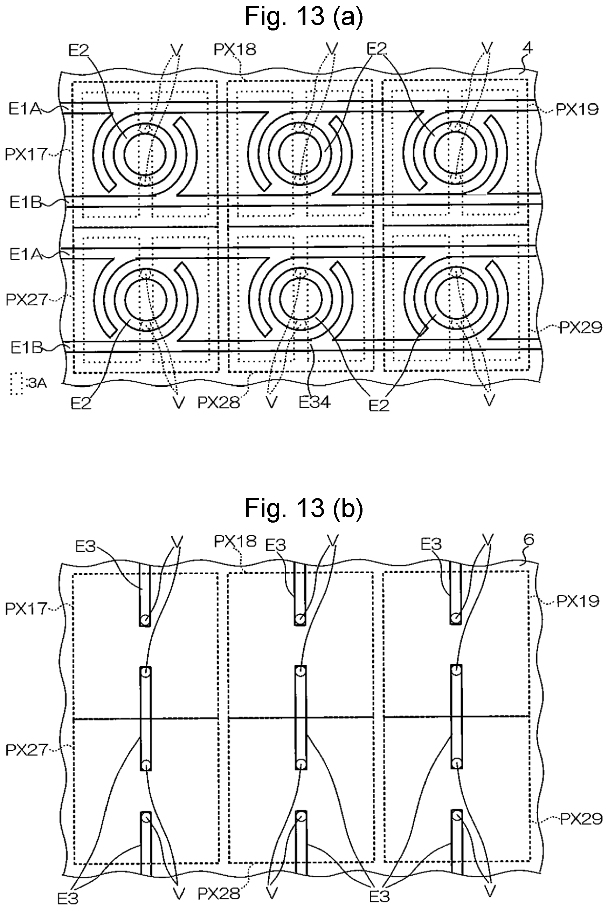

[Figs. 13(a) and 13(b)] Figs. 13(a) and 13(b) show a diagram showing a structure of sensor pixels according to a second modification, in which Fig. 13(a) is a plan view showing a structure of a first electrode layer and Fig. 13(b) is a plan view showing a structure of a second electrode layer.

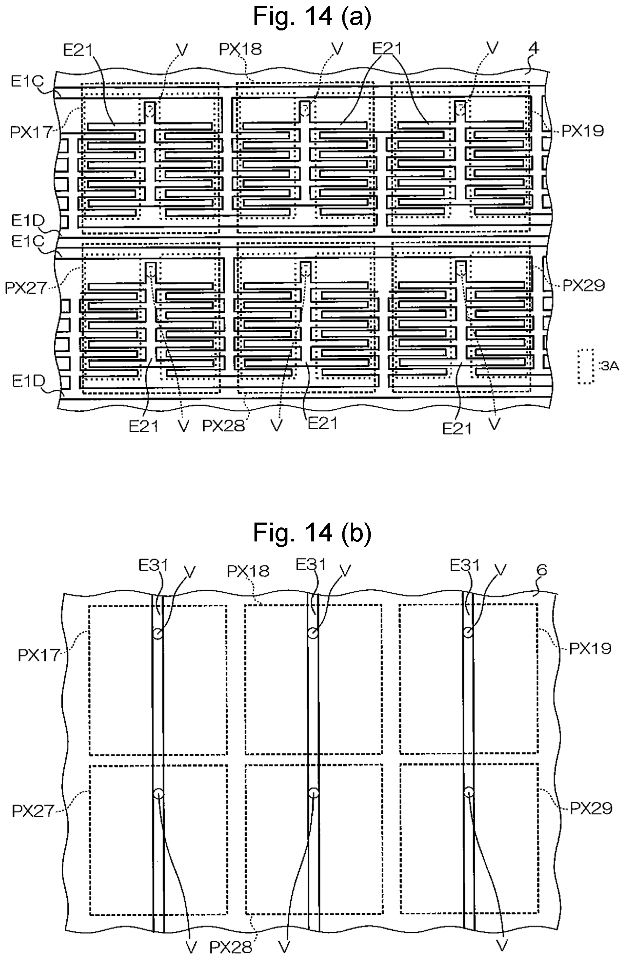

[Figs. 14(a) and 14(b)] Figs. 14(a) and 14(b) show a diagram showing a structure of sensor pixels according to a third modification, in which Fig. 14(a) is a plan view showing a structure of a first electrode layer and Fig. 14(b) is a plan view showing a structure of a second electrode layer.

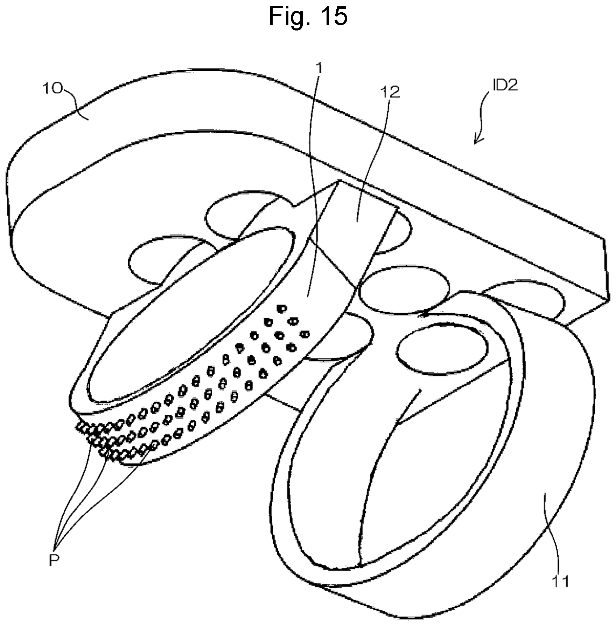

[Fig. 15] Fig. 15 is an external perspective view showing a structure of an indenter according to a fourth modification.

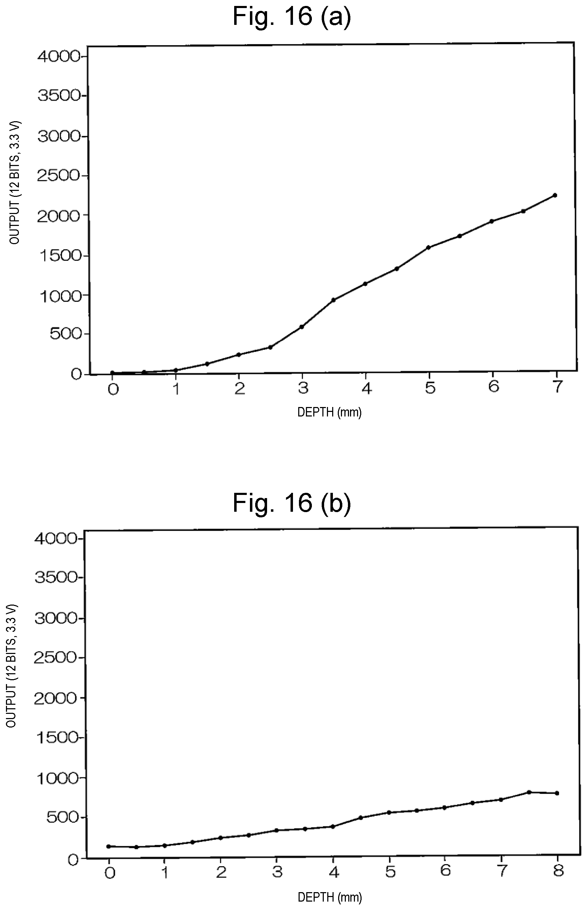

[Figs. 16(a) and 16(b)] Figs. 16(a) and 16(b) show a diagram showing an improvement in accuracy of pressure detection due to the structure of the indenter according to the fourth modification, in which Fig. 16(a) is a graph chart (i) showing the improvement in accuracy and Fig. 16(b) is a graph chart (ii) showing the improvement in accuracy.

Description of Embodiment

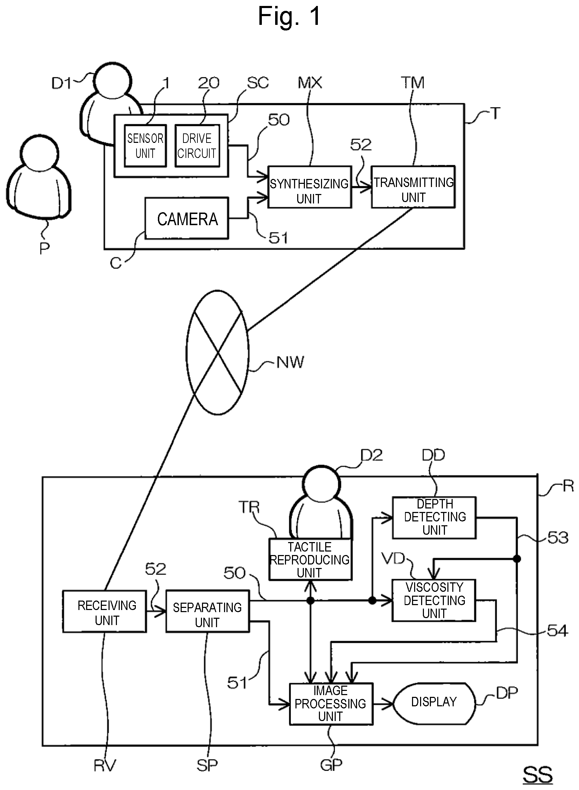

Next, a mode for carrying out the present invention will be described with reference to Figs. 1 to 16(b). An embodiment and respective modifications to be described below are an embodiment and modifications in a case where the present invention is applied to a remote pressure detection system which performs processing of transmitting pressure data indicating pressure detected during palpation by a pressure sensor mounted to, for example, a finger of a doctor who palpates an affected area of a patient to another doctor who is at a location away from the doctor and who performs a diagnosis and the like on the palpation based on the pressure data. Note that in the following description, the doctor who palpates the patient will be referred to as a "first doctor" and the doctor who performs a diagnosis and the like based on the pressure data will be referred to as a "second doctor".

## (I) Embodiment

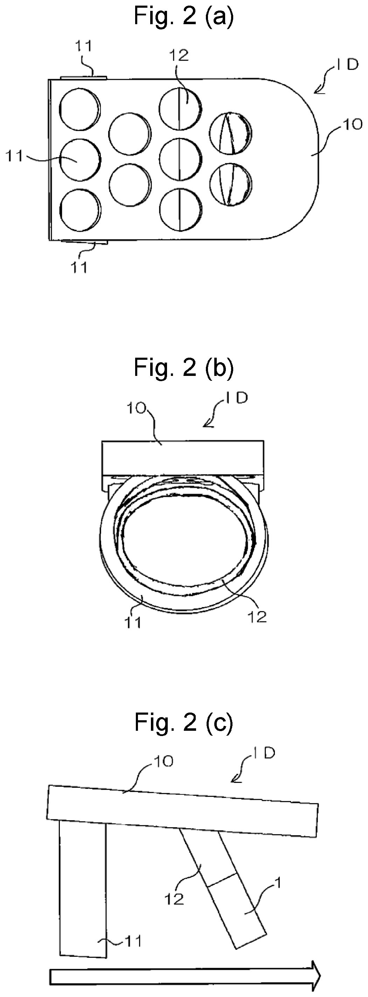

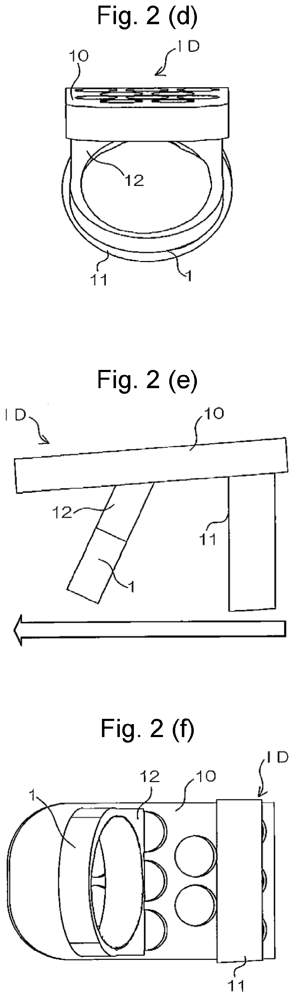

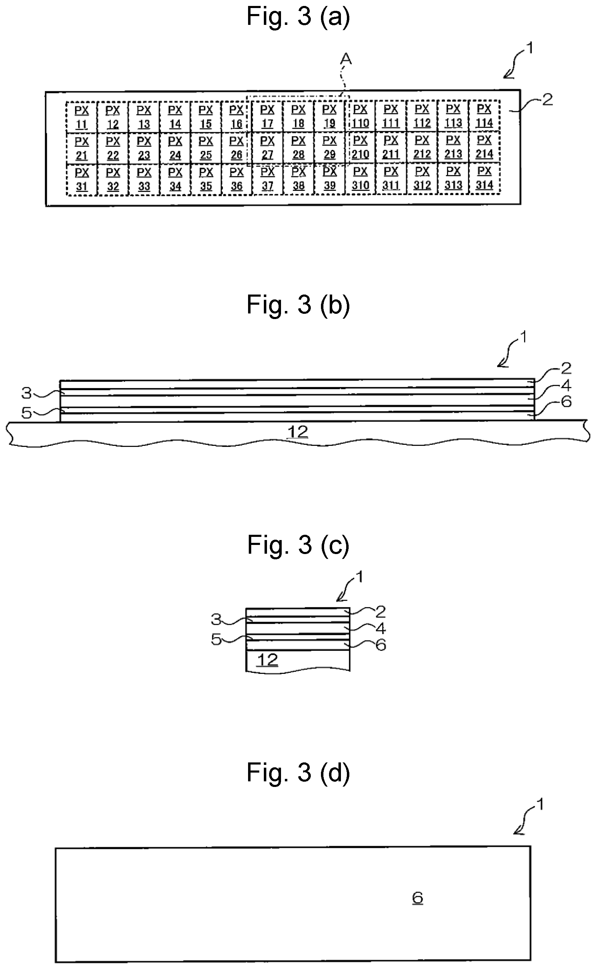

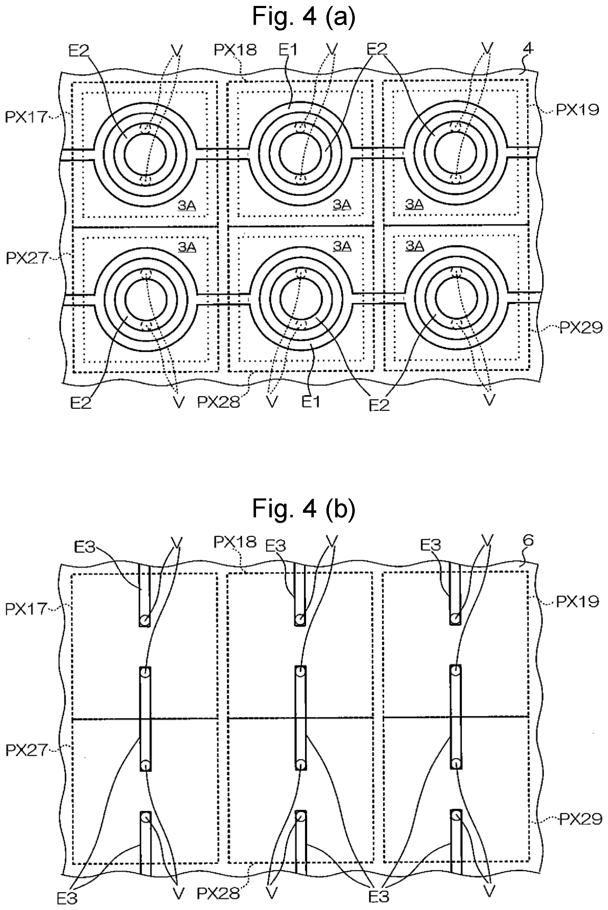

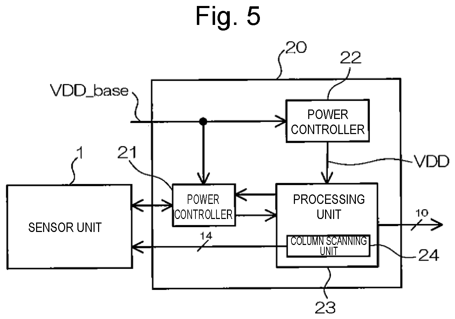

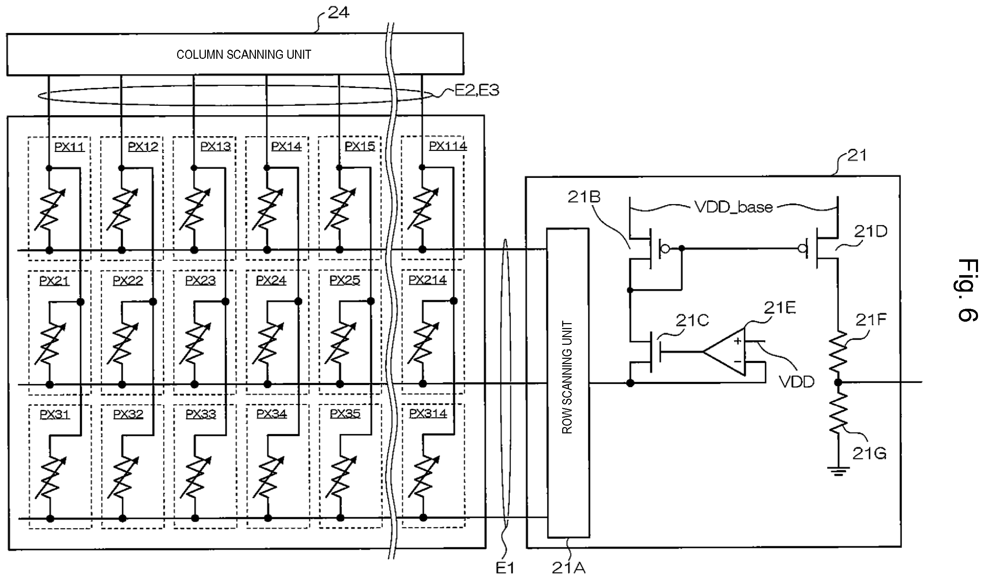

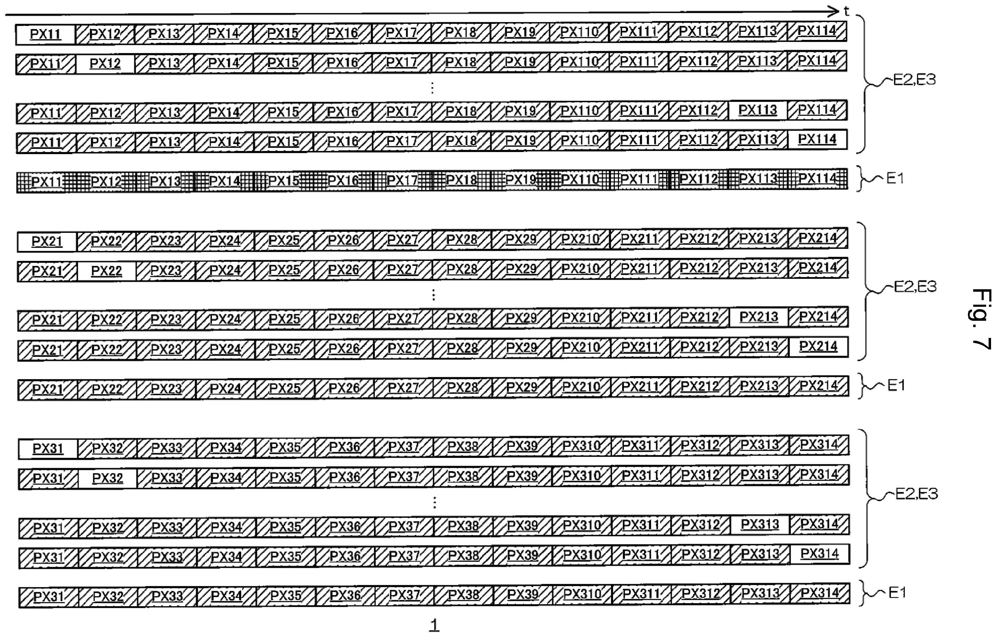

First, an embodiment of the present invention will be described with reference to Figs. 1 to 11. Note that Fig. 1 is a block diagram showing an approximate configuration of a remote pressure detection system according to the embodiment, Figs. 2(a) to 2(f) show an external view showing a structure of an indenter according to the embodiment, Figs. 3(a) to 3(d) show an external view showing a structure of a sensor unit according to the embodiment, and Figs. 4(a) and 4(b) show a diagram showing a structure of sensor pixels according to the embodiment. In this case, a structure of sensor pixels other than the sensor pixels shown in Figs. 4(a) and 4(b) is similar to the structure of the sensor pixels shown in Figs. 4(a) and 4(b). In addition, Fig. 5 is a block diagram showing an approximate configuration of a pressure sensor according to the embodiment, Fig. 6 is a circuit diagram showing a detailed configuration of the pressure sensor, and Figs. 7 to 9 are timing charts showing an operation of the pressure sensor. Furthermore, Figs. 10(a) and 10(b) show a diagram showing a pressure display example and the like in the pressure sensor, and Fig. 11 is a graph chart explaining detections of a press-in depth and viscosity, respectively, in the pressure sensor.

As shown in Fig. 1, a remote pressure detection system SS according to the embodiment is constituted of: a transmitting apparatus T which is installed by the first doctor D1 who palpates a patient P by, for example, a finger to generate the pressure data 50 and generate image data 51 capturing the palpation procedure and which transmits the pressure data 50 and the image data 51; a processing apparatus R which is installed by the second doctor D2 and which outputs a result of the palpation and the like based on the transmitted pressure data 50 and the image data 51; and a network NW such as the Internet which connects the transmitting apparatus T and the processing apparatus R so as to be capable of transmitting and receiving the pressure data 50 and the image data 51.

In addition, the transmitting apparatus T is constituted of a pressure sensor SC including a sensor unit 1 and a drive circuit 20 thereof, a camera C, a synthesizing unit MX, and a transmitting unit TM. Furthermore, the processing apparatus R is constituted of a receiving unit RV, a separating unit SP, a tactile reproducing unit TR to be operated by the second doctor D2, a depth detecting unit DD, a viscosity detecting unit VD, an image processing unit GP, and a display DP made of a liquid crystal display or the like. In this case, the drive circuit 20 corresponds to an example of the "detecting means" according to the present application, the transmitting unit TM corresponds to an example of the "transmitting means" according to the present application, the receiving unit RV corresponds to an example of the "receiving means" according to the present application, and the display DP corresponds to an example of the "output means" according to the present application.

In the configuration described above, the sensor unit 1 of the pressure sensor SC constituting the transmitting apparatus T is constructed by arranging a plurality of sensor pixels, to be described later, in a planar pattern and in an array. In this case, each sensor pixel corresponds to an example of the "pressure detecting unit" according to the present application. The sensor unit 1 is arranged on a surface of an indenter according to the embodiment (a surface of the indenter that comes into contact with the skin of the patient P during the palpation) having a shape that enables the indenter to be mounted on a fingertip of the finger (the finger to perform the palpation with respect to the patient P) of the first doctor D1. Each sensor pixel constituting the sensor unit 1 is driven by the drive circuit 20 of the pressure sensor SC, respectively, detects pressure applied to each sensor pixel by the palpation, respectively, generates the pressure data 50 indicating the pressure, and outputs the pressure data 50 to the synthesizing unit MX. At this point, the pressure applied to each sensor pixel is pressure applied to each sensor pixel as a reaction force from an affected area of the patient P when the area is compressed by the finger of the doctor D1 (the finger mounted with the indenter including the sensor unit 1) during the palpation.

On the other hand, the camera C constituting the transmitting apparatus T is a camera C with a shooting range capable of capturing both the first doctor D1 and the patient P undergoing palpation by the first doctor D1, and, in parallel with the detection of pressure from the affected area of the patient P by the pressure sensor SC, generates the image data 51 as the result of photography during the palpation and outputs the image data 51 to the synthesizing unit MX.

Accordingly, the synthesizing unit MX that constitutes the transmitting apparatus T synthesizes the pressure data 50 from the pressure sensor SC and the image data 51 from the camera C using an existing synthesis format set advance, generates synthetic data 52 for the processing apparatus R, and transmits the synthetic data 52 to the transmitting unit TM. Accordingly, the transmitting unit TM constituting the transmitting apparatus T uses an existing transmission format set in advance to transmit the synthetic data 52 to the processing apparatus R via the network NW.

Next, the synthetic data 52 transmitted from the transmitting apparatus T via the network NW is received by the receiving unit RV constituting the processing unit R and output to the separating unit SP. Accordingly, the separating unit SP constituting the processing apparatus R separates the image data 51 and the pressure data 50 from the synthetic data 52, outputs the image data 51 to the image processing unit GP, and outputs the pressure data 50 to the image processing unit GP, the tactile reproducing unit TR, the depth detecting unit DD, and the viscosity detecting unit VD, respectively. Subsequently, the image processing unit GP constituting the processing apparatus R outputs the image data 51 to the display DP which constitutes the transmitting apparatus T and which is arranged at a position which is visible from the second doctor D2. Accordingly, the second doctor D2 can visually confirm the palpation procedure by the first doctor D1 together with the patient P at a remote location. From the palpation procedure, for example, the second doctor D2 can confirm a position of a site (affected area) of the patient P that is being palpated and a reaction by the patient P to the palpation (for example, whether or not the patient P feels pain). In addition, based on the pressure data 50, for each sensor pixel constituting the sensor unit 1, the image processing unit GP displays the pressure detected in the sensor pixel and a distribution of the pressure on the display DP so as to be visible. More specifically, using the display DP, the image processing unit GP displays the pressure detected by each sensor pixel in a shape and at a position corresponding to the position of the sensor pixel in the sensor unit 1 using, for example, a color corresponding to a magnitude of the pressure (refer to Fig. 10(a)). The display mode of the pressure and the distribution thereof on the display DP will be described in detail later with reference to Figs. 10(a) and 10(b) and the like.

On the other hand, the tactile reproducing unit TR constituting the processing apparatus R reproduces a tactile sensation by the first doctor D1 during the palpation based on the pressure data 50 separated by the separating unit SP. More specifically, the tactile reproducing unit TR is mounted to a same finger of the second doctor D2 as the first doctor D1 performing the palpation, and reproduces the tactile sensation by applying pressure based on the pressure data 50 to the finger to which the tactile reproducing unit TR is mounted. Accordingly, by sensing the reproduced pressure by their own finger, the second doctor D2 is able to obtain the tactile sensation as if the second doctor D2 was directly palpating the patient P. In this case, since the second doctor D2 can view the display DP, consequently, the second doctor D2 can recognize which site of the patient P the tactile sensation reproduced by the tactile reproducing unit TR originates from, as well as the reaction by the patient P to the palpation.

Next, based on the pressure data 50 separated by the separating unit SP, the depth detecting unit DD constituting the processing apparatus R detects a depth to which the finger of the first doctor D1 mounted with the indenter according to the embodiment on which the sensor unit 1 is arranged was pressed into the surface of the affected area of the patient P during the palpation, generates depth data 53 indicating the detected depth, and outputs the depth data 53 to the image processing unit GP and the viscosity detecting unit VD, respectively.

Accordingly, the image processing unit GP displays the depth on the display DP based on the depth data 53. At this point, the depth detecting unit DD detects the depth based on a pressure distribution on the surface of the sensor unit 1 on which each sensor pixel is arranged or, in other words, based on a width of a range on the surface of the sensor unit 1 in which sensor pixels where pressure has been detected exist. The detection of depths in the depth detecting unit DD will be described in detail later with reference to Figs. 10(a) and 10(b) and the like.

Furthermore, based on the pressure data 50 separated by the separating unit SP and the depth data 53 from the depth detecting unit DD, the viscosity detecting unit VD constituting the processing apparatus R detects a viscosity of the affected area of the patient P when the finger of the first doctor D1 mounted with the indenter according to the embodiment was pressed into the skin (surface) of the affected area of the patient P during the palpation, generates viscosity data 54 indicating the detected viscosity, and outputs the viscosity data 54 to the image processing unit GP. Subsequently, the image processing unit GP displays the viscosity on the display DP based on the viscosity data 54. The detection of viscosity in the viscosity detecting unit VD will be described in detail later with reference to Fig. 11 and the like.

Due to the functions of the remote pressure detection system SS according to the example described above, by collaborating with the first doctor D1 who is actually performing the palpation on the patient P, the second doctor D2 located away from the patient P can make accurate diagnoses and the like on the patient P by obtaining information as if the second doctor D2 were directly palpating the patient P themselves.

Next, a specific configuration and operations of the pressure sensor SC according to the embodiment including the sensor unit 1 and the drive circuit 20 will be described with reference to Figs. 1 to 11.

First, a structure of the indenter according to the embodiment, having a surface on which is arranged the sensor unit 1 constructed by arranging a plurality of sensor pixels in a planar pattern and in an array, will be described with reference to Figs. 2(a) to 2(f). As described above, the indenter according to the embodiment is used by being mounted to a fingertip of, for example, an index finger of the first doctor D1. In addition, the indenter ID corresponds to an example of the "mounting means" according to the present application.

Specifically, as shown in a six-view external diagram in Figs. 2(a) to 2(f), the indenter ID includes: a plate-shaped base material 10 provided with a plurality of holes for weight reduction; a fixing ring 11 into which, when mounting the indenter ID to a fingertip, the finger is inserted to fix the indenter ID to the fingertip; and a mounting ring 12 into which the fingertip is inserted and having the sensor unit 1 fixed to an outside surface. At this point, the sensor unit 1 has the sensor pixels arranged in a planar pattern and in an array and, as a whole, has a plate shape curved along the outside surface of the mounting ring 12. In addition, the finger to which the indenter ID is mounted is passed through the fixing ring 11 and the mounting ring 12, respectively, in a direction indicated by a white arrow in Figs. 2(c) and 2(e) or, in other words, a direction from the fixing ring 11 toward the mounting ring 12. Furthermore, the indenter ID as a whole excluding the sensor unit 1 has an integrally molded structure made of, for example, resin.

Next, the structure of the sensor unit 1 arranged on the outside surface of the mounting ring 12 of the indenter ID will be described in specific terms with reference to Figs. 3(a) to 3(d), 4(a) and 4(b). Note that Figs. 3(a) to 3(d) do not show a connection line connecting the sensor unit 1 and the drive circuit 20 to each other. In addition, for clarity of explanation, Figs. 3(a) to 3(d) show a plan view of the structure of the sensor unit 1 (refer to Figs. 2(a) to 2(f)) that is curved along the outside surface of the mounting ring 12.

As shown in a top view and the like in Figs. 3(a) to 3(d), the sensor unit 1 according to the embodiment is constructed by stacking, from a side fixed to the mounting ring 12: a second electrode layer 6; an insulating layer 5 made of a thin-film insulating material; a first electrode layer 4; a film-like protective layer 3; and a film-like pressure-sensitive layer 2 which, when external pressure is applied thereto, a resistance value of an applied portion changes. In this configuration, the pressure-sensitive layer 2 is to come into contact with the skin of an affected area of the patient P during palpation by the first doctor D1. In addition, as shown in Fig. 3(a), sensor pixels PX11 to PX314 according to the embodiment are formed, respectively, at positions where three row electrodes provided in the first electrode layer 4 and 14 column electrodes provided in the first electrode layer 4 and the second electrode layer 6, respectively, intersect with each other (a total of 42 intersecting positions (3 rows times 14 columns)). Specifically, a first sensor pixel row is formed by the sensor pixels PX11 to PX114 shown in Fig. 3(a), a second sensor pixel row is formed by the sensor pixels PX21 to PX214, and a third sensor pixel row is formed by the sensor pixels PX31 to PX314. Due to this configuration, 42 sensor pixels PX11 to PX314 are formed arranged in a grid pattern in the sensor unit 1 according to the embodiment. In addition, opening portions (to be described later) for the row electrodes and the column electrodes constituting the sensor pixels PX11 to PX314 and the pressure-sensitive layer 2 to come into contact with each other are provided at positions of the protective layer 3 (to be described later) corresponding to the sensor pixels PX11 to PX314, respectively. Furthermore, due to each row electrode and each column electrode being driven by the drive circuit 20, pressure applied to the sensor unit 1 during the palpation is detected for each of the sensor pixels PX11 to PX314.

Next, configurations of the row electrodes and the column electrodes constituting each of the sensor pixels PX11 to PX314 will be described with reference to Figs. 4(a) and 4(b). Note that Figs. 4(a) and 4(b) show a plan view of the configurations of the row electrodes and the column electrodes formed in an area A including the sensor pixels PX17 to PX19 and sensor pixels PX27 to PX29 in the sensor unit 1 shown in Fig. 3(a). In this case, the configurations of the row electrodes and the column electrodes are also the same with respect to the other sensor pixels PX11 to PX16, sensor pixels PX110 to PX114, sensor pixels PX21 to PX26, and sensor pixels PX210 to PX314. In addition, Fig. 4(a) is a plan view of the configurations of the row electrodes and the column electrodes formed in the first electrode layer 4, and Fig. 4(b) is a plan view of the configuration of the column electrodes formed in the second electrode layer 6 that is separated from the first electrode layer 4 by the insulating layer 5. Note that in the following description, when describing matters common to the sensor pixels PX11 to PX314, the sensor pixels will be collectively referred to as a "sensor pixel PX".

As shown in Fig. 4(a), in the first electrode layer 4 corresponding to one sensor pixel PX, a row electrode E1 which is formed in a ring shape within the one sensor pixel PX and which is common within the row of sensor pixels PX to which the one sensor pixel PX belongs and a column electrode E2 which is formed in a ring shape within the one sensor pixel PX and which is located inside the row electrode E1 are formed insulated from each other. At this point, the respective row electrodes E1 are insulated from each other between the respective rows of the sensor pixels PX. In addition, the opening portion 3A (indicated by dotted line in Fig. 4(a)) is formed at a position of the protective layer 3 corresponding to the one sensor pixel PX and, accordingly, the row electrode E1 and the column electrode E2 in the first electrode layer 4 are formed insulated from each other but in contact with the pressure-sensitive layer 2.

On the other hand, as shown in Fig. 4(b), in the second electrode layer 6 corresponding to the one sensor pixel PX, a column electrode E3 is formed which is connected via a via V (via V penetrating the insulating layer 5) to the column electrode E2 which is common within the row of sensor pixels PX to which the one sensor pixel PX belongs and which is formed so as to correspond to the one sensor pixel PX. At this point, the respective column electrodes E2 and E3 are insulated from each other between the respective columns of the sensor pixels PX. In addition, due to the column electrodes E2 and E3 and the row electrode E2 being driven by the drive circuit 20 for each column and each row and the pressure-sensitive layer 2 subjected to pressure from the affected area of the patient P coming into contact with the row electrode E1 and the column electrode E2 in the first electrode layer 4 via the opening portion 3A, detection of the pressure as the sensor pixel PX is performed. A detected value of the pressure is output as the pressure data 50 from the drive circuit 20 as will be described later. At this point, the portion of the pressure-sensitive layer 2 in contact with the row electrode E1 and the column electrode E2 in the first electrode layer 4 via the opening portion 3A can be regarded as a variable resistor of which an electrical resistance value changes in response to the pressure applied to the portion (in the embodiment, the pressure received from the skin of the affected area of the patient P) (specifically, a variable resistor connected between the row electrode E1 and the column electrode E2 (column electrode E3)).

Next, a configuration and operations of the drive circuit 20 that drives the sensor unit 1 configured as described with reference to Figs. 3(a) to 3(d) and 4 will be described with reference to Figs. 5 to 9.

As shown in Fig. 5, the drive circuit 20 according to the embodiment which is connected to the sensor unit 1 is constituted of: a power controller 21 which is connected to each of three rows' worth of the row electrodes E1 while switching among the row electrodes E1 in a time-shared manner; a power controller 22; and a processing unit 23 including a column scanning unit 24 which is connected to each of 14 column electrodes E2 (column electrodes E3) while switching among the column electrodes E2 (column electrodes E3) in a time-shared manner (in other words, a 14-bit column scanning unit 24). At this point, VDD_base as a power supply voltage is applied to the power controller 21 and the power controller 22, respectively. In addition, based on the VDD_base, the power controller 22 generates VDD as a power supply voltage of the processing unit 23 and outputs VDD to the processing unit 23.

On the other hand, as shown in Fig. 6, the power controller 21 is constituted of a row scanning unit 21A which is connected to each of three rows' worth of the row electrodes E1 while switching among the row electrodes E1 in a time-shared manner, FETs (Field Effect Transistors) 21B to 21D, a differential amplifier 21E, and fixed resistors 21F and 21G, connected in an aspect shown in Fig. 6. Note that each sensor pixel PX is shown as a variable resistor in Fig. 6. At this point, VDD_base is applied to the FETs 21B and 21D and VDD is applied to a positive terminal of the differential amplifier 21E. In addition, pressure data for each row electrode E1 is output from a connecting point between the fixed resistor 21F and the fixed resistor 21G as an analog signal VOUT to the processing unit 23. Subsequently, pressure data as the analog signal VOUT output from the power controller 21 is converted into digital data with an arbitrary number of bits (for example, 10 bits) in the processing unit 23 and output as the pressure data 50. By the drive circuit 20 configured as described above, the column electrode E2 (column electrode E3) is scanned and driven by the column scanning unit 24 in a time-shared manner while one row electrode E1 is being selected by the row scanning unit 21A. Next, the column electrode E2 (column electrode E3) is scanned and driven by the column scanning unit 24 in a time-shared manner while a second row electrode E1 is being selected by the row scanning unit 21A. Furthermore, the column electrode E2 (column electrode E3) is scanned and driven by the column scanning unit 24 in a time-shared manner while a third row electrode E1 is being selected by the row scanning unit 21A. Subsequently, a scan and drive of each row electrode E1 and a scan and drive of each column electrode E2 (column electrode E3) are repeated. Accordingly, the pressure data 50 as pressure detection in each sensor pixel PX is output from the pressure sensor SC in a time-shared manner. Note that in this case, the row electrode E1 functions as a so-called read line while the column electrode E2 (column electrode E3) functions as both a so-called power line and an address line.

More specifically, in the sensor unit 1, in a period during which the row electrode E1 (shown with vertical and horizontal hatchings in Fig. 7) of the first row corresponding to the sensor pixels PX11 to PX114 in Fig. 7 is selected in the row scanning unit 21A, the sensor pixels PX11 to PX114 are sequentially scanned and driven by the column scanning unit 24 in a time-shared manner as indicated by no hatchings in Fig. 7. At this point, the column scanning unit 24 scans and drives the sensor pixels PX to be scanned and driven by, for example, sequentially changing potentials of the sensor pixels PX to a ground potential. Accordingly, the pressure data 50 indicating pressure detected in each of the sensor pixels PX11 to PX114 is output from the processing unit 23 as digital data to the synthesizing unit MX (refer to Fig. 1). Note that at this point, potentials of all of the column electrodes E2 (column electrode E3) corresponding to the sensor pixels PX including the row electrode E1 of the first row other than the sensor pixel PX (refer to no hatchings in Fig. 7) being scanned in the period during which the row electrode E1 of the first row is being selected by the row scanning unit 21A are set to a same potential (for example, power supply voltage VDD) by the processing unit 23 (refer to diagonal hatchings in Fig. 7). In addition, all of the sensor pixels PX21 to PX314 corresponding to the row electrodes E1 not selected in Fig. 7 (excluding the sensor pixel PX being scanned and driven by the column scanning unit 24 (refer to no hatchings in Fig. 7)) are also set to the same potential (for example, power supply voltage VDD) by the processing unit 23 (refer to diagonal hatchings in Fig. 7).

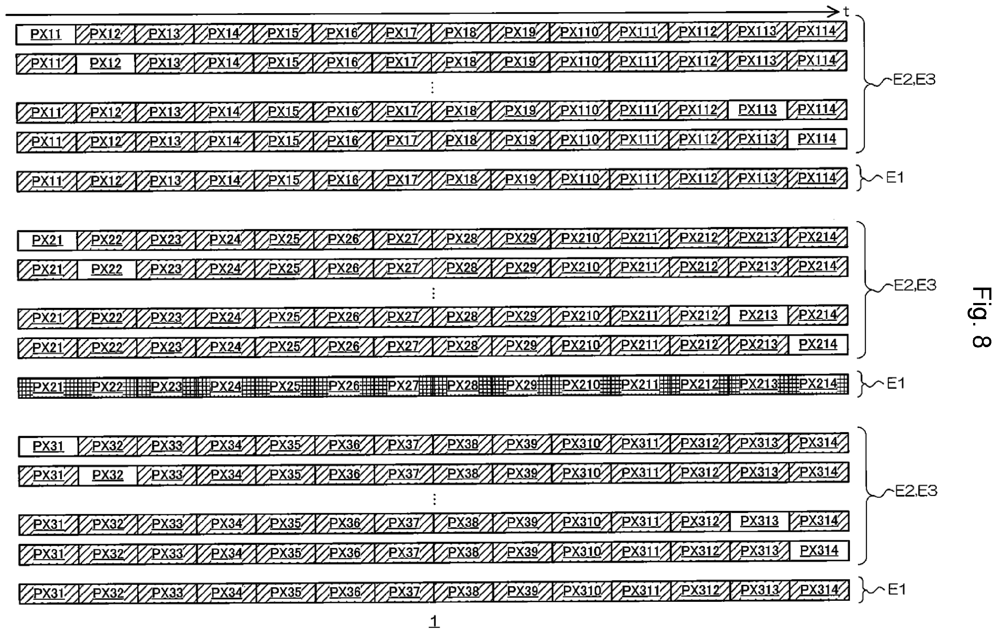

In a similar manner, in a period during which the row electrode E1 (shown with vertical and horizontal hatchings in Fig. 8) of the second row corresponding to the sensor pixels PX21 to PX214 in Fig. 8 is selected in the row scanning unit 21A, the sensor pixels PX21 to PX214 are sequentially scanned and driven by the column scanning unit 24 in a time-shared manner as indicated by no hatchings in Fig. 8 in a similar manner to that shown in Fig. 7. Accordingly, the pressure data 50 indicating pressure detected in each of the sensor pixels PX21 to PX214 is output from the processing unit 23 as digital data to the synthesizing unit MX. Note that at this point, potentials of all of the column electrodes E2 (column electrode E3) corresponding to the sensor pixels PX including the row electrode E1 of the second row other than the sensor pixel PX (refer to no hatchings) being scanned in the period during which the row electrode E1 of the second row is being selected by the row scanning unit 21A are set to a same potential (for example, power supply voltage VDD) by the processing unit 23 (refer to diagonal hatchings in Fig. 8). In addition, all of the sensor pixels PX11 to PX114 and the sensor pixels PX31 to PX314 corresponding to the row electrodes E1 not selected in Fig. 8 (excluding the sensor pixel PX being scanned and driven by the column scanning unit 24 (refer to no hatchings in Fig. 8)) are also set to the same potential (for example, power supply voltage VDD) by the processing unit 23 (refer to diagonal hatchings in Fig. 8).

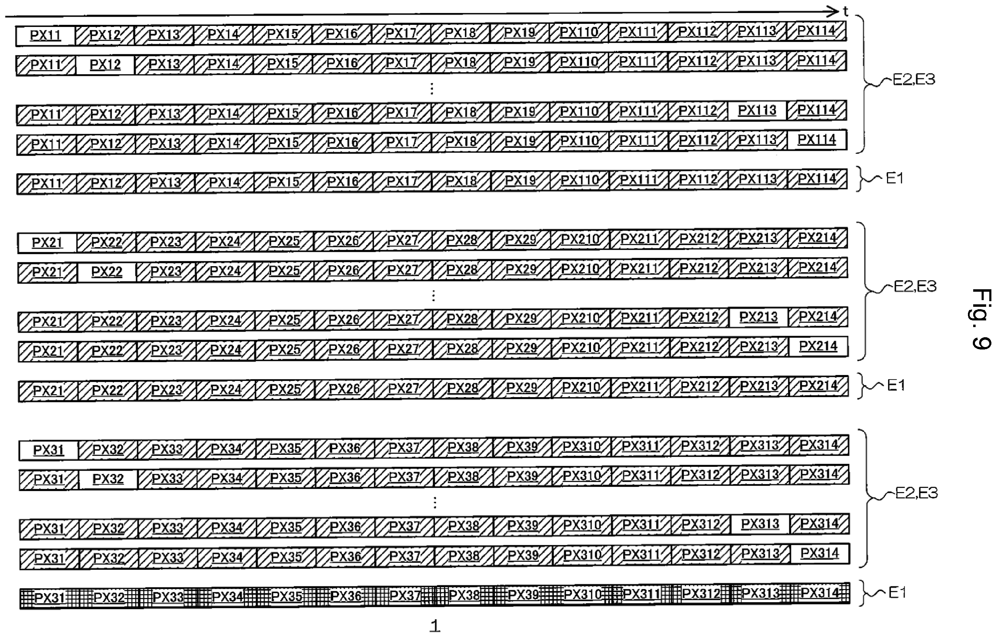

In a similar manner, in a period during which the row electrode E1 (shown with vertical and horizontal hatchings in Fig. 9) of the third row corresponding to the sensor pixels PX31 to PX314 in Fig. 9 is selected in the row scanning unit 21A, the sensor pixels PX31 to PX314 are sequentially scanned and driven by the column scanning unit 24 in a time-shared manner as indicated by no hatchings in Fig. 9 in a similar manner to that shown in Fig. 7. Accordingly, the pressure data 50 indicating pressure detected in each of the sensor pixels PX31 to PX314 is output from the processing unit 23 as digital data to the synthesizing unit MX. Note that at this point, potentials of all of the column electrodes E2 (column electrode E3) corresponding to the sensor pixels PX including the row electrode E1 of the third row other than the sensor pixel PX (refer to no hatchings) being scanned in the period during which the row electrode E1 of the third row is being selected by the row scanning unit 21A are set to a same potential (for example, power supply voltage VDD) by the processing unit 23 (refer to diagonal hatchings in Fig. 9). In addition, all of the sensor pixels PX11 to PX214 corresponding to the row electrodes E1 not selected in Fig. 9 (excluding the sensor pixel PX being scanned and driven by the column scanning unit 24 (refer to no hatchings in Fig. 9)) are also set to the same potential (for example, power supply voltage VDD) by the processing unit 23 (refer to diagonal hatchings in Fig. 9).

Due to the functions of the pressure sensor SC described above, the pressure detected during the palpation in each of the sensor pixels PX constituting the sensor unit 1 is output to the synthesizing unit MX as the pressure data 50 in a time-shared manner for each sensor pixel PX.

Next, processing in the processing apparatus R which is executed using the pressure data 50 output from the transmitting apparatus T due to the functions of the transmitting apparatus T and, in particular, processing of each of the image processing unit GP, the depth detecting unit DD, and the viscosity detecting unit VD will be described in specific terms with reference to Figs. 10(a), 10(b), and 11.

First, based on the pressure data 50, the image processing unit GP of the processing apparatus R uses the display DP to display the pressure detected by each sensor pixel PX in a shape and at a position corresponding to the position of the sensor pixel PX in the sensor unit 1 using, for example, a color corresponding to a magnitude of the pressure. More specifically, as shown in Fig. 10(a), based on the pressure data 50, the image processing unit GP displays the pressure detected by each sensor pixel PX for each color in a state aligned with the position of each sensor pixel PX. In the case illustrated in Fig. 10(a), the lighter-colored areas indicate sensor pixels PX that detected higher pressure.

Next, based on the pressure data 50, the depth detecting unit DD of the processing apparatus R detects a press-in depth $\delta zn$ to which the finger of the first doctor D1 mounted with the indenter ID was pressed into the skin SK of the affected area of the patient P during the palpation, generates depth data 53 indicating the detected press-in depth $\delta zn$, and outputs the depth data 53 to the image processing unit GP and the viscosity detecting unit VD, respectively. Accordingly, the image processing unit GP displays the depth on the display DP based on the depth data 53. At this point, specifically, according to a principle shown in Fig. 10(b), the depth detecting unit DD first associates pressure Fn that is a sum of pressure indicated by the pressure data 50 from all of the sensor pixels PX, respectively, with the press-in depth $\delta zn$. Next, based on continuous values of the pressure Fn and the press-in depth $\delta zn$ obtained when the finger of the first doctor D1 presses into the skin SK of the affected area of the patient P during the palpation, the depth detecting unit DD generates a graph indicating a relationship between the press-in depth $\delta zn$ and an elasticity value such as that shown in Fig. 11. Note that in Fig. 11, "$\times$" denotes an actual measurement value when the finger of the first doctor D1 is pressed into the skin SK, a graph denoted by reference sign "G1" represents a virtual elastic curve when the finger of the first doctor D1 is pressed into the skin SK, **"•"** denotes an actual measurement value when the finger of the first doctor D1 is lifted from the skin SK, and a graph denoted by reference sign "G2" represents a virtual elastic curve when the finger of the first doctor D1 is lifted from the skin SK. In this manner, the depth detecting unit DD obtains the relationship (refer to Fig. 11) between the press-in (indentation) depth $\delta zn$ and the elasticity value based on a change in the pressure Fn during the indentation by the finger (in other words, a change in the resistance value in each sensor pixel PX). In parallel therewith, the depth detecting unit DD calculates a radius Ri of the mounting ring 12 corresponding to a length 2a of a contact portion of the indenter ID with the skin SK (in other words, a length 2a of an area on the sensor unit 1 of the sensor pixel PX where pressure is detected as the contact portion). Accordingly, based on equation (1) below, the depth detecting unit DD simultaneously calculates an elastic force E* from the patient P and the press-in depth $\delta zn$ to which the indenter ID (sensor unit 1) is pressed in by palpation in accordance with the shape of the indenter ID. Subsequently, the depth detecting unit DD generates the depth data 53 indicating the calculated press-in depth δzn and outputs the depth data 53 to the image processing unit GP.
[Expression 1]

$$E^* = \frac{3}{4} \frac{F_n}{\sqrt{R_i \delta_{zn}^3}} \quad \cdots (1)$$

Next, based on the pressure data 50 and the depth data 53, the viscosity detecting unit VD of the processing apparatus R detects a viscosity when, after the finger of the first doctor D1 was pressed into the skin SK of the affected area of the patient P during the palpation, the finger is lifted from the skin SK, generates viscosity data 54 indicating the detected viscosity, and outputs the viscosity data 54 to the image processing unit GP. In this case, based on continuous values of the pressure Fn and the press-in depth δzn obtained when the finger of the first doctor D1 is lifted from the skin SK of the affected area of processing of the patient P during the palpation, the viscosity detecting unit VD generates a graph indicating a relationship between the press-in depth δzn and the elasticity value such as that shown in Fig. 11 in a similar manner to the depth detecting unit DD. At this point, the higher the viscosity, or the shorter the time taken to lift the finger from the skin SK, the gentler the gradient of the graph of the press-in depth δzn relative to the elasticity value (refer to Fig. 11). Note that the viscosity detecting unit VD detects the time when the finger is lifted based on, for example, a change over time of the press-in depth δzn. The change over time of the press-in depth δzn at this point is determined by a sampled press-in depth δzn and a sampling time (denoted by "Time" in Fig. 11) thereof. Based on the gradient of the graph shown in Fig. 11, the viscosity detecting unit VD detects the viscosity, generates the viscosity data 54 indicating the detected viscosity, and outputs the viscosity data 54 to the image processing unit GP. Subsequently, the image processing unit GP displays the viscosity on, for example, the display DP based on the viscosity data 54.

As described above, according to the remote pressure detection system SS of the embodiment, due to the row electrodes E1 and the column electrodes E2 formed in the first electrode layer 4 and the column electrodes E3 formed in the second electrode layer 6 stacked on the rear surface of the film-like pressure-sensitive layer 2 of which the resistance value changes when the front surface thereof is pressed being scanned and driven for each sensor pixel PX, pressure during palpation due to a change in the resistance value in a plurality of sensor pixels PX is detected for each sensor pixel PX. Therefore, stacking the row electrodes E1 and the like only on the rear surface of the film-like pressure-sensitive layer 2 enables a manufacturing step as the pressure sensor SC to be simplified and manufacturing costs to be reduced, having the pressure-sensitive layer 2 being directly pressed from the front surface side of the sensor pixels PX (side of the patient P) enables detection sensitivity of pressure to be improved and, furthermore, the sensor pixels PX arranged in a planar pattern enable pressure to be detected as a surface.

In addition, since the plurality of sensor pixels PX are regularly arranged in an array in the sensor unit 1 and the row electrodes E1 and the like included in the plurality of sensor pixels PX, respectively, are driven by a sequential drive system (refer to diagonal hatchings in Figs. 7 to 9), a change in the resistance value in each sensor pixel PX can be accurately detected as a surface.

Furthermore, since each sensor pixel PX includes the row electrodes E1 with a shape that surrounds the column electrodes E2 and the row electrodes E1, the column electrodes E2, and the column electrodes E3 included in each sensor pixel PX other than the sensor pixel PX that is the drive object are set to a same potential (VDD) (refer to Figs. 7 to 9), the formation of a so-called current path in one or a plurality of sensor pixels PX that are not objects of detection of pressure during palpation can be prevented and the detection sensitivity of pressure can be improved.

Moreover, since the sensor unit 1 has a shape that enables the sensor unit 1 to be mounted to a tip of a finger of the first doctor D1 and the sensor unit 1 is mounted to the finger by the indenter ID (refer to Figs. 2(a) to 2(f)), pressure when the first doctor D1 and the second doctor D2 palpate the patient P can be accurately detected.

In addition, since the indenter ID including the sensor unit 1 has a shape that can be mounted to the tip of a finger of the first doctor D1 like a ring (refer to Figs. 2(a) to 2(f)), pressure can be accurately detected while preventing the sensor unit 1 from falling off the fingertip during palpation.

Furthermore, since the depth of the pressing is further detected based on a width (in other words, the length 2a) of an area on the sensor unit 1 including the position of the sensor pixel PX where a change in the resistance value is detected in the pressure-sensitive layer 2 (refer to Fig. 10(b)), detection of pressure due to a change in the resistance value in the pressure-sensitive layer 2 and detection of the depth of pressing can be simultaneously performed.

(II) Modifications

Next, modifications that are other modes for carrying out the present invention will be respectively described with reference to Figs. 12(a) to 16(b). Note that in the remote pressure detection system according to each modification to be described below, members similar to those of the remote pressure detection system SS according to the embodiment described above will be denoted by similar member numbers and descriptions of details will not be repeated.

(A) First Modification

First, a first modification will be described with reference to Figs. 12(a) and 12(b). Note that Figs. 12(a) and 12(b) show a plan view showing a structure of a sensor pixel according to the first modification.

In the remote pressure detection system SS according to the embodiment described above, a case where each of the row electrodes E1 and the column electrodes E2 provided in the first electrode layer 4 of each sensor pixel PX has a ring shape has been described (refer to Figs. 4(a) and 4(b)). However, in addition thereto, as shown in Fig. 12(a), each sensor pixel PX may be configured such that row electrodes E11 and column electrodes E21, each having a comb shape, are arranged alternately. At this point, the row electrodes E11 are common in the sensor pixels PX constituting one row, and three rows' worth of row electrodes E11 are switched and scanned by the row scanning unit 21A (refer to Fig. 6) to be driven. In addition, the column electrodes E21 in the first electrode layer 4 and the row electrodes E31 in the second electrode layer 6 shown in Fig. 12(b) are connected via a via V across the insulating layer 5. Furthermore, the row electrodes E31 corresponding to one column are common in the sensor pixels PX constituting the row, and 14 columns' worth of column electrodes E21 (column electrodes E31) are switched and scanned by the column scanning unit 24 (refer to Fig. 6) to be driven. Note that even when the row electrodes E11 and the column electrodes E21 have comb shapes, a size of the entire sensor unit according to the first modification can be made similar to the size of the entire sensor unit 1 according to the embodiment. Even with the remote pressure detection system according to the first modification described above, advantageous effects equivalent to those of the remote pressure detection system SS according to the embodiment can be achieved.

(B) Second Modification

Next, a second modification will be described with reference to Figs. 13(a) and 13(b). Note that Figs. 13(a) and 13(b) show a plan view showing a structure of a sensor pixel according to the second modification.

In the remote pressure detection system SS according to the embodiment described above, a case where the sensor unit 1 as a whole includes three row electrodes E1 (one row electrode E1 for each sensor pixel PX corresponding to one row) has been described (refer to Figs. 4(a), 4(b), and 6). However, in addition thereto, the sensor unit can be configured such that the sensor unit as a whole includes six row electrodes (two row electrodes (a row electrode E1A and a row electrode E1B) for each sensor pixel PX corresponding to one row). In this case, in one sensor pixel PX, as shown in Fig. 13(a), the row electrode E1A and the row electrode E1B that are parallel to each other must surround the column electrode E2 and must be insulated from each other in the first electrode layer 4. Note that as shown in Fig. 13(a), an opening portion 3A according to the second modification is defined as a range encompassing only one row electrode E1A (or one row electrode E1B) and the column electrode E2 for a single sensor pixel PX. Furthermore, configurations of the column electrode E2 and the column electrode E3 according to the second modification can be the same as those of the remote pressure detection system SS according to the embodiment. In addition, as a pressure sensor of the second modification, the row electrodes E1A and the row electrodes E1B are individually scanned and driven in a time-shared manner and, furthermore, each row is scanned and driven in a time-shared manner in a similar manner to that of the pressure sensor SC according to the embodiment. In other words, as the row scanning unit according to the second modification, six row electrodes E1A and six row electrodes E1B are to be scanned and driven in a time-shared manner for each row electrode and for each row. In this case, the row electrode E1A (or the row electrode E1B) functions as a so-called read line while the column electrode E2 (column electrode E3) functions as both a power line and an address line in a similar manner to the pressure sensor SC according to the embodiment. According to the remote pressure detection system of the second modification described above, the resolution for pressure detection can be doubled (in other words, a size of a portion where pressure detection is to be performed (in other words, a size of the opening portion 3A) can be halved) relative to the remote pressure detection system SS according to the embodiment.

(C) Third Modification

Next, a third modification will be described with reference to Figs. 14(a) and 14(b). Note that Figs. 14(a) and 14(b) show a plan view showing a structure of a sensor pixel according to the third modification.

In the remote pressure detection system according to the second modification described above, a case where each of the row electrodes E1A and the row electrodes E1B as well as the column electrodes E2 provided in the first electrode layer 4 of each sensor pixel PX has a circular shape has been described (refer to Figs. 13(a) and 13(b)). However, in addition thereto, as shown in Fig. 14(a), row electrodes E1C and row electrodes E1D as well as column electrodes E21, each having a comb shape, may be configured to be arranged alternately. At this point, the row electrodes E1C and the row electrodes E1D are common in the sensor pixels PX constituting one row, respectively, and six rows' worth of the row electrodes E1C and the row electrodes E1D are switched and scanned by the row scanning unit (refer to Fig. 6) to be driven. In addition, the column electrodes E21 in the first electrode layer 4 and the row electrodes E31 in the second electrode layer 6 shown in Fig. 14(b) are connected via a via V across the insulating layer 5. Furthermore, the row electrodes E31 corresponding to one column are common in the sensor pixels PX constituting the row, and 14 columns' worth of column electrodes E21 (column electrodes E31) are switched and scanned by the column scanning unit 24 (refer to Fig. 6) to be driven. Note that even when the row electrodes E1C and the row electrodes E1D as well as the column electrodes E21 have comb shapes, a size of the entire sensor unit according to the third modification can be made similar to the size of the entire sensor unit according to the second modification. Even with the remote pressure detection system according to the third modification described above, advantageous effects similar to those of the remote pressure detection system according to the second modification can be achieved.

(D) Fourth Modification

Next, a fourth modification will be described with reference to Figs. 15, 16(a) and 16(b). Note that Fig. 15 is an external perspective view showing a structure of an indenter according to the fourth modification, and Figs. 16(a) and 16(b) show a diagram showing an improvement in accuracy of pressure detection due to the structure of the indenter.

In the remote pressure detection system SS according to the embodiment and the remote pressure detection system according to each modification described above, the indenter ID with an outer appearance shown in Figs. 2(a) to 2(f) has been used as the indenter ID in the remote pressure detection systems, respectively. However, in addition thereto, as shown in an external perspective view (an external perspective view from obliquely downward) in Fig. 15, an indenter ID2 may be configured such that, for example, a rod-shaped projection PP is erected toward the patient P at each position on the front surface of a pressure-sensitive film 2 corresponding to each sensor pixel PX constituting the sensor unit 1. Consequently, the indenter ID2 according to the fourth modification has the same number of projections PP as the number (42) of sensor pixels PX of the sensor unit 1. When using the indenter ID2 according to the fourth modification, since pressure applied to each sensor pixel PX (pressure as a reactive force from the skin SK of an affected area of the patient P) is to concentrate in a portion of the sensor pixel PX of roots of the projections PP, sensitivity of pressure as the sensor unit 1 is to improve as compared to a case where there are no projections PP. More specifically, when no projections PP are present such as in the case illustrated in Fig. 16(a) (when pressing a sponge with a finger mounted with the indenter ID2) and in the case illustrated in Fig. 16(b) (when pressing a powder puff with a finger mounted with the indenter ID2), the object is too soft and there is virtually no sensitivity to pressure. However, using the indenter ID2 including the projections PP on the front surface of the sensor unit 1 enables pressure to be reliably detected as the sensor unit 1 (in other words, sensitivity as the sensor unit 1 is improved) even when the object is a soft sponge and a powder puff. When using the indenter ID2 according to the fourth modification described above, since the projections PP are further included on the front surface of the pressure-sensitive film 2 in each sensor pixel PX, the sensitivity of pressure detection can be improved. In addition, when the projections PP are rod-like projections erected on the front surface of the pressure-sensitive layer 2 as illustrated in Fig. 15, the sensitivity in pressure detection can be further improved.

(E) Fifth Modification

Next, a fifth embodiment will be described.

In the remote pressure detection system SS according to the embodiment and the remote pressure detection system according to each modification described above, each sensor pixel PX is sequentially driven in a time-shared manner for each row or each column constituting the sensor pixel PX (refer to Figs. 7 to 9). However, in addition thereto, each sensor pixel PX may be scanned and driven in each of the following modes by subjecting the electrodes in each row or column to so-called parallel driving.

(I) A power controller 21 may be provided for each row of the sensor unit 1 and all of the rows may be driven in parallel. In this case, each row electrode may function as a read line while each column electrode may function as both a power line and an address line, or each row electrode may function as both a power line and an address line while each column electrode may function as a read line.
(II) Instead of providing the column scanning unit 24 as in the embodiment or each modification, each column of the sensor unit 1 may be provided with a drive unit that drives the column and all columns may be driven in parallel. Even in this case, each row electrode may function as a read line while each column electrode may function as both a power line and an address line, or each row electrode may function as both a power line and an address line while each column electrode may function as a read line.
(III) The parallel driving in (I) above and the parallel driving in (II) above may be combined.

In the case of the fifth modification described above, although the drive circuit 20 increases in circuit size, a detection speed as the pressure sensor SC improves due to the parallel driving. In addition, since the row electrodes E1 and the like included in the plurality of sensor pixels PX, respectively, are driven by a parallel drive system, a change in the resistance value in each sensor pixel PX can be accurately detected as a surface.

## (F) Other Modifications

Finally, as other modifications, in the remote pressure detection system SS according to the embodiment and the remote pressure detection system according to each modification described above, a case where the pressure data 50 and the image data 51 as a result of palpating the patient P are remotely transmitted has been described. However, in addition thereto, the present invention can be widely applied to cases where a detection object of pressure is other than a person (patient P) such as an animal or some kind of object and where pressure applied from the detection object is to be detected.

Industrial Applicability

As described above, the present invention can be applied to the field of pressure sensors, and particularly yields remarkable advantageous effects when applied in situations requiring the detection, from an object, of pressure applied as a surface.

Reference Signs List

1 Sensor unit
2 Pressure-sensitive layer
3 Protective layer
3A Opening portion
4 First electrode layer
5 Insulating layer
6 Second electrode layer
10 Base material
11 Fixing ring
12 Mounting ring
20 Drive circuit
21, 22 Power controller
21A Row scanning unit
21B, 21C, 21D FET
21E Differential amplifier
21F, 21G Fixed resistor
23 Processing unit
24 Column scanning unit
50 Pressure data
51 Image data
52 Synthetic data
53 Depth data
54 Viscosity data
P Patient
T Transmitting apparatus
R Processing apparatus
V Via
A Area
C Camera
E1, E1A, E1B, E1C, E1D, E11 Row electrode
E2, E3, E21 Column electrode
SK Skin

PP Projection
NW Network
SC Pressure sensor
SS Remote pressure detection system
D1 Dirst doctor
D2 Second doctor
MX Synthesizing unit
TM Transmitting unit
RV Receiving unit
SP Separating unit
TR Tactile reproducing unit
DD Depth detecting unit
VD Viscosity detecting unit
GP Image processing unit
DP Display
ID, ID2 Indenter
PX11, PX12, PX13, PX14, PX15, PX16, PX17, PX18, PX19, PX110, PX111, PX112, PX113, PX114, PX21, PX22, PX23, PX24, PX25, PX26, PX27, PX28, PX29, PX210, PX211, PX212, PX213, PX214, PX31, PX32, PX33, PX34, PX35, PX36, PX37, PX38, PX39, PX310, PX311, PX312, PX313, PX314 Sensor pixel

## Claims

1. A pressure sensor comprising: a plurality of pressure detecting units arranged in a planar pattern, each pressure detecting unit including a film-like resistor of which a resistance value changes when pressed from a front surface and a drive line laminated only on a rear surface of the resistor; and
detecting means that drives the drive line for each of the pressure detecting units, the detecting means detecting pressure of pressing applied to the plurality of the pressure detecting units for each of the pressure detecting units based on a change in the resistance value caused by the pressing.

2. The pressure sensor according to claim 1, further comprising
a projection on the front surface of the resistor in each of the pressure detecting units.

3. The pressure sensor according to claim 2, wherein the projection is a rod-like projection erected on the front surface.

4. The pressure sensor according to any one of claims 1 to 3, wherein

the plurality of the pressure detecting units are regularly arranged in an array,
one of the pressure detecting units includes a plurality of the drive lines, and
the detecting means drives each of the drive lines included in each of the plurality of the pressure detecting units either by a sequential drive system or a multiple parallel drive system.

5. The pressure sensor according to any one of claims 1 to 4, wherein

one of the pressure detecting units includes one first drive line and two second drive lines which are the drive lines intersecting at a position of the pressure detecting unit on the rear surface, and the detecting means drives each of the drive lines either by:

(i) a drive method involving driving the first drive line and the second drive lines constituting one of the pressure detecting units independently of each other;
or
(ii) a drive method involving driving the two second drive lines constituting one of the pressure detecting units independently of each other.

6. The pressure sensor according to any one of claims 1 to 5, wherein

each of the pressure detecting units includes shielding means that electrically shields the one pressure detecting unit from the other pressure detecting units, and
the detecting means drives the pressure detecting unit that is a drive object while maintaining the shielding means included in each of the other pressure detecting units other than the pressure detecting unit that is the drive object at a same potential.

7. The pressure sensor according to any one of claims 1 to 6, wherein

the pressure detecting units are arranged in a shape that can be mounted to a tip of a human finger, and
the pressure sensor further comprises mounting means for mounting the pressure sensor to the tip.

8. The pressure sensor according to claim 7, wherein the pressure detecting units have a shape that can be mounted to the tip like a ring.

9. The pressure sensor according to any one of claims 1 to 8, wherein
the detecting means further detects a depth of the pressing based on a width of an area on the pressure sensor including a position of the pressure detecting unit where the pressure is detected.

10. A remote pressure detection system comprising:

the pressure sensor according to any one of claims 1 to 9;
transmitting means that transmits detected data indicating a detection result of the pressure;
receiving means that receives the transmitted detected data; and
output means that outputs the detection result indicated by the received detected data.

# Fig. 1

# Fig. 2 (a)

# Fig. 2 (b)

# Fig. 2 (c)

## Fig. 2 (d)

## Fig. 2 (e)

## Fig. 2 (f)

## Fig. 3 (a)

## Fig. 3 (b)

## Fig. 3 (c)

## Fig. 3 (d)

## Fig. 4 (a)

## Fig. 4 (b)

# Fig. 5

# Fig. 6

## Fig. 7

## Fig. 8

EP 4 752 512 A1

Fig. 9

t

PX11 | PX12 | PX13 | PX14 | PX15 | PX16 | PX17 | PX18 | PX19 | PX110 | PX111 | PX112 | PX113 | PX114
PX11 | PX12 | PX13 | PX14 | PX15 | PX16 | PX17 | PX18 | PX19 | PX110 | PX111 | PX112 | PX113 | PX114
⋮
PX11 | PX12 | PX13 | PX14 | PX15 | PX16 | PX17 | PX18 | PX19 | PX110 | PX111 | PX112 | PX113 | PX114
PX11 | PX12 | PX13 | PX14 | PX15 | PX16 | PX17 | PX18 | PX19 | PX110 | PX111 | PX112 | PX113 | PX114
} E2,E3

PX11 | PX12 | PX13 | PX14 | PX15 | PX16 | PX17 | PX18 | PX19 | PX110 | PX111 | PX112 | PX113 | PX114 } E1

PX21 | PX22 | PX23 | PX24 | PX25 | PX26 | PX27 | PX28 | PX29 | PX210 | PX211 | PX212 | PX213 | PX214
PX21 | PX22 | PX23 | PX24 | PX25 | PX26 | PX27 | PX28 | PX29 | PX210 | PX211 | PX212 | PX213 | PX214
⋮
PX21 | PX22 | PX23 | PX24 | PX25 | PX26 | PX27 | PX28 | PX29 | PX210 | PX211 | PX212 | PX213 | PX214
PX21 | PX22 | PX23 | PX24 | PX25 | PX26 | PX27 | PX28 | PX29 | PX210 | PX211 | PX212 | PX213 | PX214
} E2,E3

PX21 | PX22 | PX23 | PX24 | PX25 | PX26 | PX27 | PX28 | PX29 | PX210 | PX211 | PX212 | PX213 | PX214 } E1

PX31 | PX32 | PX33 | PX34 | PX35 | PX36 | PX37 | PX38 | PX39 | PX310 | PX311 | PX312 | PX313 | PX314
PX31 | PX32 | PX33 | PX34 | PX35 | PX36 | PX37 | PX38 | PX39 | PX310 | PX311 | PX312 | PX313 | PX314
⋮
PX31 | PX32 | PX33 | PX34 | PX35 | PX36 | PX37 | PX38 | PX39 | PX310 | PX311 | PX312 | PX313 | PX314
PX31 | PX32 | PX33 | PX34 | PX35 | PX36 | PX37 | PX38 | PX39 | PX310 | PX311 | PX312 | PX313 | PX314
} E2,E3

PX31 | PX32 | PX33 | PX34 | PX35 | PX36 | PX37 | PX38 | PX39 | PX310 | PX311 | PX312 | PX313 | PX314 } E1

1

## Fig. 10 (a)

## Fig. 10 (b)

# Fig. 11

Time: 456 ms

✕ : ACTUAL MEASUREMENT VALUE WHEN FINGER OF THE FIRST DOCTOR D1 IS PRESSED INTO THE SKIN SK
G1 : VIRTUAL ELASTIC CURVE WHEN FINGER OF THE FIRST DOCTOR D1 IS PRESSED INTO THE SKIN SK
● : ACTUAL MEASUREMENT VALUE WHEN FINGER OF THE FIRST DOCTOR D1 IS LIFTED FROM THE SKIN SK
G2 : VIRTUAL ELASTIC CURVE WHEN FINGER OF THE FIRST DOCTOR D1 IS LIFTED FROM THE SKIN SK

# Fig. 12 (a)

# Fig. 12 (b)

## Fig. 13 (a)

## Fig. 13 (b)

# Fig. 14 (a)

# Fig. 14 (b)

Fig. 15

## Fig. 16 (a)

## Fig. 16 (b)

## INTERNATIONAL SEARCH REPORT

| International application No. |
| --- |
| **PCT/JP2024/031702** |

| A. | CLASSIFICATION OF SUBJECT MATTER |
| --- | --- |

*G01L 5/00*(2006.01)i
FI:   G01L5/00 101Z

According to International Patent Classification (IPC) or to both national classification and IPC

| B. | FIELDS SEARCHED |
| --- | --- |

Minimum documentation searched (classification system followed by classification symbols)

G01L5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 5-081977 A (INABA RUBBER KK) 02 April 1993 (1993-04-02) | 1-3 |
| | paragraphs [0001]-[0006], [0013]-[0017], fig. 1-9 | |
| Y | | 4-10 |
| Y | JP 2023-074771 A (JAPAN DISPLAY INC.) 30 May 2023 (2023-05-30) | 4-10 |
| | paragraphs [0015], [0020], fig. 5, 10 | |
| Y | JP 2023-108952 A (JAPAN DISPLAY INC.) 07 August 2023 (2023-08-07) | 4-10 |
| | paragraphs [0012]-[0035], fig. 3-4 | |
| Y | JP 2012-247372 A (NIPPON MEKTRON, LTD.) 13 December 2012 (2012-12-13) | 7-10 |
| | paragraph [0047] | |
| Y | JP 2006-064408 A (SHARP KABUSHIKI KAISHA) 09 March 2006 (2006-03-09) | 7-10 |
| | paragraph [0031], fig. 1 | |
| Y | JP 2009-109307 A (NITTA CORPORATION) 21 May 2009 (2009-05-21) | 10 |
| | paragraphs [0013]-[0014], [0051]-[0052], fig. 1 | |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/031702** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021/193162 A1 (JAPAN DISPLAY INC.) 30 September 2021 (2021-09-30) entire text, all drawings | 1-10 |

Form PCT/ISA/210 (second sheet) (July 2022)

## INTERNATIONAL SEARCH REPORT
**Information on patent family members**

International application No.

**PCT/JP2024/031702**

| Patent document cited in search report | | | Publication date (day/month/year) | Patent family member(s) | Publication date (day/month/year) |
|---|---|---|---|---|---|
| JP | 5-081977 | A | 02 April 1993 | (Family: none) | |
| JP | 2023-074771 | A | 30 May 2023 | US 2023/0152177 A1<br>paragraphs [0043], [0058], fig. 5, 10 | |
| JP | 2023-108952 | A | 07 August 2023 | US 2023/0236078 A1<br>paragraphs [0033]-[0056], fig. 3-4<br>CN 116499617 A | |
| JP | 2012-247372 | A | 13 December 2012 | US 2014/0150571 A1<br>paragraph [0176] | |
| JP | 2006-064408 | A | 09 March 2006 | (Family: none) | |
| JP | 2009-109307 | A | 21 May 2009 | (Family: none) | |
| WO | 2021/193162 | A1 | 30 September 2021 | US 2023/0016015 A1<br>CN 115335673 A | |

Form PCT/ISA/210 (patent family annex) (July 2022)

**EP 4 752 512 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012159463 A